Europäisches Patentamt

European Patent Office

Office européen des brevets

(11) Veröffentlichungsnummer: **0 237 759 B1**

# EUROPÄISCHE PATENTSCHRIFT

(45) Veröffentlichungstag der Patentschrift: 08.05.91

(51) Int. Cl.⁵: **B60J 7/11**

(21) Anmeldenummer: 87101704.2

(22) Anmeldetag: 07.02.87

(54) Fahrzeugdach.

(30) Priorität: 08.03.86 DE 3607725

(43) Veröffentlichungstag der Anmeldung:
23.09.87 Patentblatt 87/39

(45) Bekanntmachung des Hinweises auf die
Patenterteilung:
08.05.91 Patentblatt 91/19

(84) Benannte Vertragsstaaten:
**DE FR GB NL**

(56) Entgegenhaltungen:
**EP-A- 0 076 218**
**DE-A- 3 417 983**

(73) Patentinhaber: **Webasto AG Fahrzeugtechnik**
**Kraillingerstrasse 5**
**W-8035 Stockdorf(DE)**

(72) Erfinder: **Srdinko, Klaus-Peter**
**Margaretenanger 3 a**
**W-8044 Unterschleissheim(DE)**

EP 0 237 759 B1

**Beschreibung**

Die Erfindung bezieht sich auf ein Fahrzeugdach mit einem eine Dachöffnung mindestens teilweise umgebenden Rahmen, einem Dekkel, der in einer Schließstellung die Dachöffnung verschließt und der durch Schwenken gegenüber dem Rahmen um eine nahe seiner Vorderkante liegende Schwenkachse mit seiner Hinterkante über die feste Dachfläche ausstellbar ist, sowie zwei unterhalb des Deckels zu beiden Seiten der Fahrzeuglängsmittelachse am Rahmen angebrachten Rollovorrichtungen mit jeweils einer quer zur Fahrzeuglängsmittelachse verstellbaren Sonnenschutzblende.

Bei einem bekannten Fahrzeugdach dieser Art (DE-A-3417983) liegen die Befestigungspunkte für die Rollovorrichtungen und die dazu parallelen Längskanten der freien Enden der Sonnenschutzblenden an gegenüberliegenden Streben des Rahmens. Wenn bei dem bekannten Fahrzeugdach der Deckel ausgestellt und die Sonnenschutzblenden beide ausgefahren werden, ist die durch das Ausstellen des Deckels angestrebte Belüftung des Fahrzeuginnenraumes praktisch vereitelt oder mindestens stark beeinträchtigt, weil die ausgefahrenen Sonnenschutzblenden die Dachöffnung im wesentlichen verschließen.

Der im Anspruch 1 angegebenen Erfindung liegt die Aufgabe zugrunde, ein Fahrzeugdach der eingangs genannten Art zu schaffen, das eine wirkungsvolle Belüftung des Fahrzeuginnenraums auch dann gewährleistet, wenn bei ausgestelltem Deckel die Sonnenschutzblenden ausgefahren werden, und bei dem gleichwohl die Befestigung und Führung der Rollovorrichtungen und deren Sonnenschutzblenden einfach und sicher aufgebaut werden können.

Diese Aufgabe wird erfindungsgemäß dadurch gelöst, daß die Sonnenschutzblenden im ausgefahrenen Zustand im Bereich ihres freien Endes vorne an dem Rahmen und hinten an dem Deckel gehalten sind.

Bei dem erfindungsgemäßen Fahrzeugdach macht die ausgefahrene Sonnenschutzblende die Ausstellbewegung des Deckels mindestens teilweise mit. Wird der Deckel ausgestellt, wird die ausgefahrene Sonnenschutzblende an ihrem freien Ende hinten mitangehoben. Dadurch wird eine einwandfreie Fahrzeugbelüftung in Kombination mit einem wirkungsvollen Sonnenschutz sichergestellt, unabhängig davon, wie weit der Deckel jeweils ausgestellt wird. Durch die Mitnahme der ausgefahrenen Sonnenschutzblende beim Ausstellen des Deckels wird zugleich einem Flattern der Sonnenschutzblende entgegengewirkt.

Grundsätzlich ist es zwar möglich, die beiden Rollovorrichtungen im mittleren Bereich des Rahmens anzuordnen und dementsprechend die Sonnenschutzblenden seitlich nach außen auszufahren. Vorzugsweise sind jedoch die Rollovorrichtungen zu beiden Seiten des Rahmens angeordnet, und im Bereich der Fahrzeuglängsmittelachse sind Widerlager für die ausgefahrenen Sonnenschutzblenden vorne am Rahmen und hinten an der Deckelunterseite angebracht. Die seitliche Anordnung der Rollovorrichtungen erlaubt bei eingefahrenen Sonnenschutzblenden eine im mittleren Deckelbereich unbehinderte Sicht durch den zweckmäßig aus Glas oder einem anderen durchsichtigen Werkstoff gefertigten Deckel.

In vorteilhafter weiterer Ausgestaltung der Erfindung sind die Sonnenschutzblenden an ihrem freien Ende mit jeweils einer vorne und hinten über das freie Sonnenschutzblendenende vorragenden Verstärkungsleiste versehen, und bei ausgefahrener Sonnenschutzblende ist die zugehörige Verstärkungsleiste vorne mit einem rahmenfesten Widerlager und hinten mit einem deckelfesten Widerlager in Eingriff bringbar. Dies trägt zu einem einfachen Aufbau und zu einer stabilen Halterung der ausgefahrenen Sonnenschutzblenden bei.

Vorzugsweise sind die Widerlager ferner derart ausgebildet und angeordnet, daß die freien Enden der Sonnenschutzblenden spaltfrei oder näherungsweise spaltfrei zusammentreffen, wenn beide Sonnenblenden ausgefahren sind. Die Sonnenblenden geben in einem solchen Fall im eingefahrenen Zustand nahezu die gesamte Dachöffnung frei und decken andererseits im ausgefahrenen Zustand praktisch den gesamten Hebedachbereich gegen Sonneneinstrahlung ab.

Vorteilhaft liegt sowohl in der Deckelschließstellung als auch bei ausgestelltem Deckel der vordere Rand der ausgefahrenen Sonnenschutzblenden in lotrechter Richtung zwischen dem die Dachöffnung nach vorne begrenzenden Rahmeninnenrand und dem Deckel. Entsprechend liegt vorzugsweise mindestens in der Deckelschließstellung der hintere Rand der ausgefahrenen Sonnenschutzblenden in lotrechter Richtung zwischen dem die Dachöffnung nach hinten begrenzenden Rahmeninnenrand und dem Deckel. Durch ein solches Überstehen der Ränder der ausgefahrenen Sonnenschutzblenden über den vorderen und/oder den hinteren Rahmeninnenrand wird einem Flattern der Sonnenschutzblenden zusätzlich entgegengewirkt. Es wird sowohl von innen als auch von außen ein besonders ansprechendes Aussehen des Fahrzeugdachs auch bei ausgefahrenen Sonnenschutzblenden gewährleistet.

Ein bevorzugtes Ausführungsbeispiel der Erfindung ist im folgenden anhand der Zeichnungen näher erläutert. Es zeigen:

Fig. 1     eine Draufsicht auf den linken Teil eines erfindungsgemäßen Fahrzeugdachs, teilweise abgebrochen und unter Weglassung des Deckels,

Fig. 2     einen Schnitt entlang der Linie II-II der Fig. 1,

Fign. 3     und 4 einen Schnitt entlang der Linie III-III der Fig. 1 in der Deckelschließstellung bzw. bei ausgestelltem Dekkel, und

Fig. 5     einen Schnitt entlang der Linie V-V der Fig. 1.

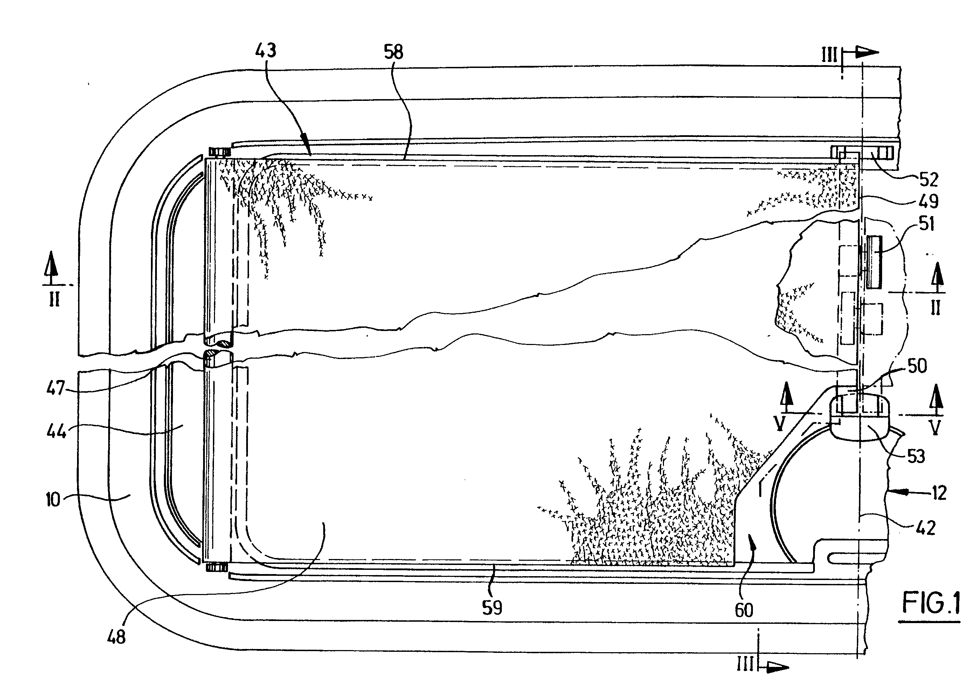

Das veranschaulichte Fahrzeugdach ist als Hebedach mit einem einteiligen Kunststoffrahmen 10 ausgebildet, der in an sich bekannter, nicht näher dargestellter Weise einen vorzugsweise abnehmbaren Deckel 11 aus durchsichtigem oder durchscheinendem Werkstoff trägt. Der Deckel 11 kann mittels einer Ausstellvorrichtung 12 um eine nahe seiner Vorderkante liegende Schwenkachse verschwenkt und dadurch mit seiner Hinterkante 13 über die feste Dachfläche 14 ausgestellt werden. Die Ausstellvorrichtung kann in beliebiger bekannter Weise ausgebildet sein. Beispielsweise kann es sich um einen handbetätigten Drehgriff oder eine motorisch angetriebene Ausstellvorrichtung (DE-B-25 08 487, DE-C- 27 10 193, DE-C-31 14 502) handeln. In den Fign. 1, 3 und 4 ist beispielshalber ein handbetätigter Dreh-Klappgriff angedeutet, wie er im einzelnen in der älteren Anmeldung PCT/GB 85/00090 (WO-A-85/03910) offenbart ist. Die Ausstellvorrichtung 12 ist einerseits im mittleren hinteren Bereich des Rahmens 10 abgestützt und steht andererseits mit dem Deckel 11 nahe dessen Hinterkante 13 in Verbindung.

Der Rahmen 10 sitzt unterhalb der festen Dachfläche 14. Er stützt sich dabei mit Nasen 16, 17 an der Unterseite der Dachfläche 14 ab. Die Nasen 17, 16 begrenzen rillenförmige Aufnahmeräume für eine Dicht- und/oder Klebmasse 18. Ein im Querschnitt im wesentlichen Z-förmiger Trimmring 19 weist einen nach außen abstehenden Flansch 20 auf, der sich im Randbereich einer mittels des Deckels 11 verschließbaren Dachöffnung 21 gegen die Außenseite der festen Dachfläche 14 anlegt. Ein Steg 22 des Trimmrings 19 greift durch die Dachöffnung 21 hindurch und geht unten in einen nach innen abgewinkelten Flansch 23 über. Der Steg 22 und der Flansch 23 greifen in einen umlaufenden Schlitz 24 des Rahmens 10 ein. Der Steg 22 liegt an der äußeren Begrenzungswand 25 des Schlitzes 24 an. Auf dem Flansch 23 sitzt eine Klemmleiste 26 mit im wesentlichen V-förmigem Querschnitt auf. Die Klemmleiste 26 weist einen äußeren Schenkel 27 und einen inneren Schenkel 28 auf. Der äußere Schenkel 27 liegt an dem Steg 22 an, während der innere Schenkel 28 mit seinem oberen Rand unter eine nach außen vorspringende Nase 29 greift, die an oberen Ende der den Schlitz 24 an seiner Innenseite begrenzenden Wand 30 ausgebildet ist. Der äußere Schenkel 27 der Klemmleiste 26 setzt sich oben in einem nach innen gerichteten Flansch 31 fort, der auf dem oberen Rand der Wand 30 aufliegt und dessen Oberseite eine im wesentlichen starre Auflagefläche für den Deckel 11 bildet. In einen zum Schlitz 24 parallelen Schlitz 33 des Rahmens 10 ist eine Dichtung 34 eingesteckt, die aus einem relativ harten unteren Teil 35 und einem zur Anlage an der Deckelunterseite bestimmten, relativ weichen oberen Teil 36 besteht. Auf einen Innensteg 37 des Rahmens 10 ist ein Kantenschutzprofil 38 aufgesteckt. Ein Abdeckprofil 39, das für einen sauberen Abschluß zwischen dem Rahmen 10 und einem (nicht dargestellten) Dachhimmel sorgt, greift in einen sich nach unten öffnenden Rahmenschlitz 40 ein.

Das Fahrzeugdach ist im wesentlichen symmetrisch zu einer bei 42 angedeuteten Längsmittelachse ausgebildet. Infolgedessen ist in den Zeichnungen nur die der linken Dachseite zugeordnete Rolloanordnung veranschaulicht. Die Rolloanordnung auf der rechten Dachseite ist im wesentlichen spiegelsymmetrisch ausgebildet und eingebaut.

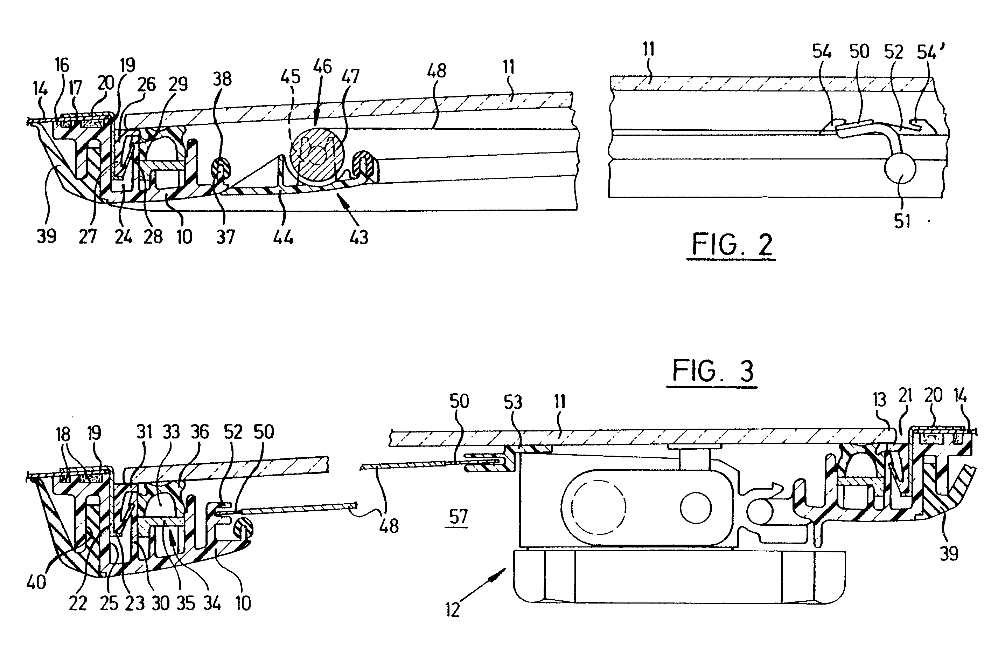

Die dargestellte, insgesamt mit 43 bezeichnete Rolloanordnung weist eine Lagerschale 44 auf, die mit dem seitlichen Teil (Fig. 2) des Rahmens 10 verbunden, z.B. am Rahmen 10 angeklipst, ist. Die Lagerschale 44 weist Lagerböcke 45 für eine Rollovorrichtung 46 auf, zu der eine Wickelrolle 47 und ein an sich bekannter, nicht näher dargestellter Rückholmechanismus gehören. Auf der Wickelrolle 47 ist eine aus flexiblem Werkstoff bestehende Sonnenschutzblende 48 im eingefahrenen Zustand aufgewickelt. Beim Ausfahren wird die Sonnenschutzblende 48 entgegen der Kraft des Rückholmechanismus von der Wickelrolle 47 abgewickelt. Die Sonnenschutzblende 48 ist an ihrem freien Ende 49 mit einer Verstärkungsleiste 50 versehen, die entsprechend Fig.1 über die Sonnenschutzblende 48 vorne und hinten übersteht. An der Verstärkungsleiste 50 ist ein Handgriff 51 befestigt. Ein Widerlager 52 für das vordere Ende der Verstärkunsleiste 50 und eine entsprechende Verstärkungsleiste 50' der in Fig.1 bei 48' angedeuteten rechten Sonnenschutzblende ist am vorderen mittleren Bereich des Rahmens 10 angebracht. Ein Widerlager 53 für das hintere Ende der Verstärkungsleisten 50, 50' ist an der Unterseite des Deckels 11 befestigt. Das Widerlager 53 sitzt dabei nahe der Deckelhinterkante 13. Die Widerlager 52, 53 sind jeweils mit zwei Fangnasen 54, 54' bzw. 55, 55' versehen, hinter denen die Verstärkungsleisten 50 bzw. 50' eingerastet werden können.

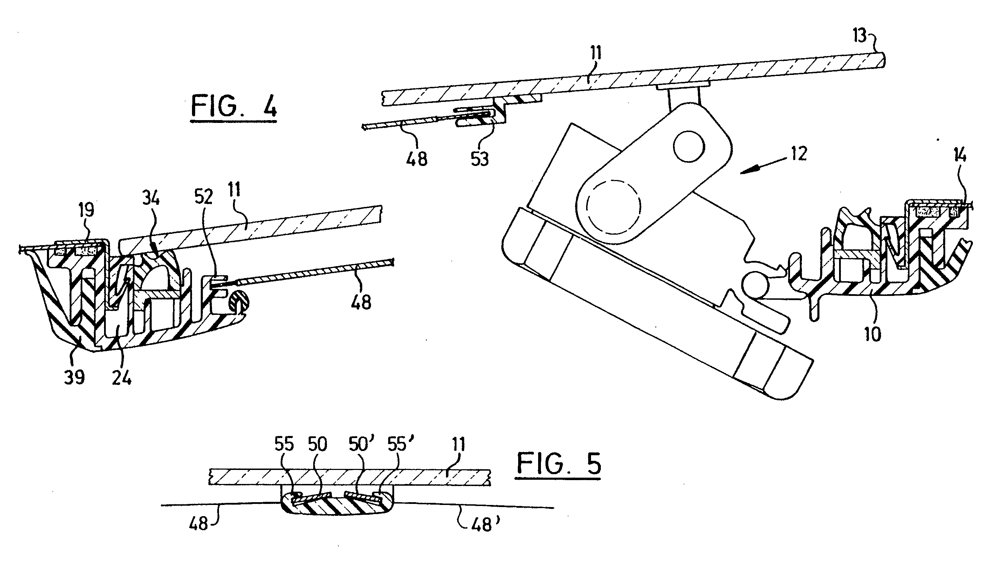

Wie die Fig. 1 erkennen läßt, ist die Sonnenschutzblende 48 breiter als der eine Rahmenöffnung 57 begrenzende Innenteil des Rahmens 10, d.h. breiter als dies dem Abstand zwischen dem Innensteg 37 im vorderen Rahmenbereich und dem Innensteg 37 im hinteren Rahmenbereich entspricht. Dadurch kommt sowohl in der Dekkelschließstellung (Fig. 3) als auch bei ausgestelltem Deckel 11 (Fig. 4) der vordere Rand 58 der ausgefahrenen Sonnenschutzblende 48 in lotrechter Richtung zwischen dem Kantenschutzprofil 38 und dem Deckel zu liegen. Mindestens in der Deckelschließstellung befindet sich ferner der hintere Rand 59 der Sonnenschutzblende 48 in lotrechter Richtung zwischen dem Kantenschutzprofil und dem Deckel 11. Der Rahmen 10 und das Kantenschutzprofil 38 verdecken dadurch die Sicht von unten auf die Ränder 58, 59 der Sonnenschutzblende 48. Die Anordnung kann so getroffen sein, daß die Sonnenschutzblende 48 im ausgefahrenen Zustand über mindestens einen Teil ihrer Länge mit den Rändern 58, 59 auf dem Kantenschutzprofil 38 des Rahmeninnenstegs 37 aufliegt und von diesem geführt wird. Die Sonnenschutzblende 48 ist im übrigen im Bereich ihres freien Endes mit einer solchen Aussparung 60 versehen, daß die Sonnenschutzblende die Funktion der Ausstellvorrichtung 12 nicht behindert.

Im eingefahrenen Zustand ist die Sonnenschutzblende 48 auf die Wickelrolle 47 aufgewickelt. Mittels des Handgriffs 51 läßt sich die Sonnenschutzblende 48 entgegen der Rückstellkraft des Rückholmechanismus (nicht veranschaulicht) ausfahren, bis die Enden der Verstärkungsleiste 50 die Fangnasen 54, 55 der Widerlager 52, 53 überlaufen haben. Läßt man jetzt den Rückholmechanismus wirksam werden, und zieht dabei den Handgriff 51 geringfügig nach unten, rasten die Verstärksungsleistenenden hinter den Fangnasen 54, 55 ein, wie dies aus den Fign. 1, 2 und 5 hervorgeht. Infolge des Eingriffs zwischen dem hinteren Ende der Verstärkungsleiste 50 und dem Widerlager 53 macht die Sonnenschutzblende 48 Ausstellbewegungen des Deckels 11 in gewissem Umfang mit. Dies ist insbesondere aus einem Vergleich der Fign. 3 und 4 zu erkennen. Durch geringfügiges weiteres Ausziehen der Sonnenschutzblende 48 und gleichzeitiges Hochdrücken des Handgriffs 51 kommt die Verstärkungsleiste 50 von den Widerlagern 52, 53 frei. Die Sonnenschutzblende 48 kann wieder eingefahren werden.

Die bei dem oben geschilderten Ausführungsbiespiel vorgesehene Verwendung gesonderter Lagerschalen 44 erlaubt es, ein Fahrzeugdach auch noch nachträglich mit Rollos auszurüsten. Grundsätzlich ist es aber auch möglich, die Rollovorrichtung 46 unmittelbar am Rahmen 10 zu lagern bzw. die Lagerschale 44 und den Rahmen 10 einstückig miteinander zu verbinden. Falls es erwünscht ist, die Sonnenshutzblenden 48, 48′ in Zwischenstellungen zu fixieren, können entsprechend zusätzliche Widelager am Rahmen und am Dekkel angebracht werden. Das deckelseitige Widerlager 53 kann gegebenenfalls auch mit dem an dem Deckel 11 angreifenden Teil der Ausstellvorrichtung 12 einstückig verbunden sein.

## Ansprüche

1. Fahrzeugdach mit einem eine Dachöffnung (21) mindestens teilweise umgebenden Rahmen (10), einem Deckel (11), der in einer Schließstellung die Dachöffnung (21) verschließt und der durch Schwenken gegenüber dem Rahmen (10) um eine nahe seiner Vorderkante liegende Schwenkachse mit seiner Hinterkante (13) über die feste Dachfläche (14) ausstellbar ist, sowie zwei unterhalb des Deckels (11) zu beiden Seiten der Fahrzeuglängsmittelachse (42) am Rahmen (10) angebrachten Rollovorrichtungen (46,46′) mit jeweils einer quer zur Fahrzeuglängsmittelachse verstellbaren Sonnenschutzblende (48,48′), **dadurch gekennzeichnet**, daß die Sonnenschutzblenden (48, 48′) im ausgefahrenen Zustand im Bereich ihres freien Endes (49) vorne an dem Rahmen (10) und hinten an dem Deckel (11) gehalten sind.

2. Fahrzeugdach nach Anspruch 1, dadurch gekennzeichnet, daß die Rollovorrichtungen (46) an den beiden Seiten des Rahmens (10) angeordnet sind und daß im Bereich der Fahrzeuglängsmittelachse Widerlager (52, 53) für die ausgefahrenen Sonnenschutzblenden (48, 48′) vorne am Rahmen und hinten an der Deckelunterseite angebracht sind.

3. Fahrzeugdach nach Anspruch 1 oder 2, dadurch gekennzeichnet, daß die Sonnenschutzblenden (48, 48′) an ihrem freien Ende (49) mit jeweils einer vorne und hinten über das freie Sonnenschutzblendenende vorragenden Verstärkungsleiste (50, 50′) versehen sind, und daß bei ausgefahrener Sonnenshutzblende die zugehörige Verstärkungsleiste vorne mit einem rahmenfesten Widerlager (52) und hinten mit einem deckelfesten Widerlager (53) in Eingriff bringbar ist.

4. Fahrzeugdach nach Ansprüchen 2 und 3, dadurch gekennzeichnet, daß die Widerlager (52, 53) derart ausgebildet und angeordnet sind, daß die freien Enden (49) der Sonnenschutzblenden (48, 48′) spaltfrei oder näherungsweise spaltfrei zusammentreffen, wenn beide Sonnenblenden ausgefahren sind.

**5.** Fahrzeugdach nach einem der vorhergehenden Ansprüche, dadurch gekennzeichnet, daß sowohl in der Deckelschließstellung als auch bei ausgestelltem Deckel (11) der vordere Rand (58) der ausgefahrenen Sonnenschutzblenden (48, 48') in lotrechter Richtung zwischen dem die Rahmenöffnung (57) nach vorne begrenzenden Rahmeninnenrand und dem Deckel liegt.

**6.** Fahrzeugdach nach einem der vorhergehenden Ansprüche, dadurch gekennzeichnet, daß mindestens in der Deckelschließstellung der hintere Rand (59) der ausgefahrenen Sonnenschutzblenden (48, 48') in lotrechter Richtung zwischen dem die Rahmenöffnung (57) nach hinten begrenzenden Rahmeninnenrand und dem Deckel (11) liegt.

## Claims

**1.** A vehicle roof with the frame (10) at least partially surrounding a roof aperture (21), a cover (11) which, in the closed position, occludes the roof aperture (21) and which by being pivoted in respect of the frame (10) about a pivot axis disposed close to its leading edge, may have its rear edge (13) extended beyond the fixed roof surface (14), and with, disposed underneath the cover (11) and on both sides of the longitudinal central axis (42) through the vehicle and on the frame (10), two roller blind devices (46, 46') each with a sun blind panel (48, 48') adjustable transversely to the longitudinal central axis through the vehicle, characterised in that the sun blind panels (48, 48'), when in the extended condition, are supported in the region of their free end (49) at the front on the frame (10) and at the back on the cover (11).

**2.** A vehicle roof according to claim 1, characterised in that the roller blind devices (46) are disposed on both sides of the frame (10) and in that there are in the region of the longitudinal central axis through the vehicle abutments (52, 53) for the extended sun blind panel (48, 48') and which are disposed on the frame at the front and on the under side of the cover at the rear.

**3.** A vehicle roof according to claim 1 or 2, characterised in that the sun blind panels (48, 48') are Provided at their free end (49) with in each case a reinforcing strip (50, 50') projecting forwardly and rearwardly beyond the free end of the sun blind panel and in that when the sun blind panel is extended the associated reinforcing strip at the front can be brought into engagement with an abutment (52) rigid with the frame and can at the rear be brought into engagement with an abutment (53) which is rigid with the cover.

**4.** A vehicle roof according to claims 2 and 3, characterised in that the abutments (52, 53) are so constructed and disposed that the free ends (49) of the sun blind panels (48, 48') meet in gap-free or virtually gap-free fashion when both sun blind panels are extended.

**5.** A vehicle roof according to one of the preceding claims, characterised in that both in the closed position of the cover and also when the cover (11) is extended, the leading edge (48) of the extended sun blind panels (48, 48') lies in a vertical direction between the cover and the inside edge of the frame which forms the front boundary of the frame aperture (57).

**6.** A vehicle roof according to one of the preceding claims, characterised in that at least in the closed position of the cover the rear edge (59) of the extended sun blind panels (48, 48') lies in a vertical direction between the cover (11) and the inside edge of the frame which forms the rear boundary of the frame aperture (57).

## Revendications

**1.** Toit de véhicule comprenant un cadre (10) entourant au moins Partiellement une ouverture pratiquée dans le toit (21), un toit ouvrant (11), qui en position fermée assure la fermeture de l'ouverture pratiquée dans le toit (21), et qui en pivotant, par rapport au cadre (10), autour d'un axe de rotation situé à proximité de son bord avant se déboîte avec son bord arrière (13) par rapport à la partie fixe du toit (14), ainsi que deux enrouleurs (46, 46') placés sur le cadre (10), au-dessous du toit ouvrant (11) des deux côtés de l'axe longitudinal du véhicule (42), munis chacun d'un pare-soleil (48, 48') réglable transversalement par rapport à l'axe longitudinal du véhicule, caractérisé en ce que les pare-soleil (48, 48') lorsqu'ils ont tirés, sont maintenus au niveau de leur extrémité (49) libre à l'avant, sur le cadre (10) et à l'arrière sur le toit ouvrant (11).

**2.** Toit de véhicule selon la revendication 1, caractérisé en ce que les enrouleurs (46) sont placés des deux côtés du cadre (10) et que l'on a placé au niveau de l'axe longitudinal du véhicule des butées (52, 53), à l'avant sur le cadre, à l'arrière sur la partie inférieure du toit ouvrant, pour les pare-soleil déployés.

3. Toit de véhicule selon la revendication 1 ou 2, caractérisé en ce qu'on a muni chacun des paresoleil (48, 48') à son extrémité libre, d'un listel de renforcement (50, 50') dépassant à l'avant et à l'arrière de son extrémité libre, et que lorsque l'on a déployé le pare-soleil le listel de renforcement correspondant est accroché à l'avant sur une butée (52) solidaire du cadre et à l'arrière sur une butée (53) solidaire du toit ouvrant

4. Toit de véhicule selon les revendications 2 et 3, caractérisé en ce que, les butées (52, 53) sont conçues et placées de manière à ce qu'il n'y ait pas ou pratiquement pas d'interstice entre les extrémités (49) des pare-soleil (48, 48') à leur point de concours, lorsque les deux pare-soleil sont déployés.

5. Toit de véhicule selon l'une des revendications précédentes, caractérisé en ce que pendant la fermeture du toit ouvrant, comme lorsque le toit ouvrant (11) est ouvert, le bord (58) avant des pare-soleil (48, 48') déployés est situé à l'aplomb entre le bord intérieur du cadre limitant vers l'avant l'ouverture du cadre (57) et le toit ouvrant.

6. Toit de véhicule selon l'une des revendications précédentes, caractérisé en ce que le bord (59) arrière des pare-soleil (48, 48') déployés, se trouve au moins pendant la fermeture du toit ouvrant, à l'aplomb entre le bord intérieur du cadre limitant vers l'arrière l'ouverture du cadre (57) et le toit ouvrant (11).

FIG.1

7

FIG. 2

FIG. 3

EP 0 237 759 B1

FIG. 4

13

11

48   53

12

14

10

19   34   52   11

48

39   24

55  50  50'  55'  11

FIG. 5

48                    48'

EP 0 237 759 B1

9